# EUROPEAN PATENT SPECIFICATION

(11) **EP 4 443 797 B1**
(45) Date of publication and mention of the grant of the patent: **04.03.2026**
(21) Application number: 22910062.3
(22) Date of filing: 21.12.2022
(51) Int. Cl.: H04L 5/00, H04W 36/36, H04W 36/30

(54) **DETECTION METHOD AND APPARATUS, AND TERMINAL AND STORAGE MEDIUM**
DETEKTIONSVERFAHREN UND -VORRICHTUNG SOWIE ENDGERÄT UND SPEICHERMEDIUM
PROCÉDÉ ET APPAREIL DE DÉTECTION, TERMINAL ET SUPPORT DE STOCKAGE

(30) Priority: 22.12.2021 CN 202111581846
(43) Date of publication of application: 09.10.2024
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: XU, Xiaodong, Beijing 100053 (CN)
(74) Representative: J A Kemp LLP
(86) International application number: PCT/CN2022/140630
(87) International publication number: WO 2023/116750

(56) References cited:
- WO-A1-2021/062576
- CN-A- 109 121 188
- CN-A- 111 182 562
- CN-A- 111 406 434
- US-A1- 2021 204 252
- "3 Generation Partnership Project; Technical Specification Group Radio Access Network; Evolved Universal Terrestrial Radio Access (E-UTRA); User Equipment (UE) procedures in idle mode (Release 16)", vol. RAN WG2, no. V16.5.0, 27 September 2021 (2021-09-27), pages 1 - 64, XP052056833, Retrieved from the Internet <URL:https://ftp.3gpp.org/Specs/archive/36_series/36.304/36304-g50.zip 36304-g50.docx> [retrieved on 20210927]

## Description

### CROSS-REFERENCE TO RELATED APPLICATION

This application is based on and claims priority to Chinese patent Application No. 202111581846.5 filed on December 22, 2021.

### TECHNICAL FIELD

The disclosure relates to the field of wireless communications, and in particular to a method for detection and a terminal.

### BACKGROUND

At present, a terminal, though is dormant, still needs to be prepared to measure or detect some channels or signals in a present system on a periodic basis. Although power consumption of the terminal is improved in such a state, the power consumption is still several orders of magnitude higher than that in the state that there is no need to make preparation for reception in advance. Therefore, the terminal monitors, by an assistance module, whether there is a power of a specific signal (which may be referred to as a "wake-up signal") from a network side to determine whether there is a signal to be sent to the terminal subsequently. If a signal power reaches a certain requirement, a communication module of the terminal is instructed to wake up. However, limited by factors such as a transmission power of the specific signal and factors such as a receiver sensitivity of the assistance module, it cannot be guaranteed that the specific signal is consistent with cell coverage in a mobile communication system (such as the fourth generation mobile communication technology (4G) or the fifth generation mobile communication technology (5G)). The inconsistency will cause that the terminal may not be able to detect the specific signal at all even if the specific signal has been sent by the network side. When the power is not detected, the terminal cannot distinguish the case that the specific signal is not transmitted by the network from the case that the specific signal is transmitted by the network but has insufficient coverage; that is, a problem of ambiguity arises. In order to solve the ambiguity problem, in related technologies, another periodically transmitted signal (which can be called a "keep-active signal") is introduced as a priori signal, which is used to help the assistance module to distinguish whether the failure in power detection at present is resulted from that the network does not transmit the specific signal, or is a result of insufficient coverage of the specific signal. However, in such a case, the terminal needs to detect two signals, increasing the complexity in system design.

CN 10912188 A discloses an Internet-of-things terminal, a system and a wake-up method for the Internet-of-things terminal, which relate to the technical field of the Internet of things. The Internet-of-things terminal includes a wake-up module and a main module.

"3 Generation Partnership Project; Technical Specification Group Radio Access Network; Evolved Universal Terrestrial Radio Access (E-UTRA); User Equipment (UE) procedures in idle mode (Release 16)", 3GPP TS 36.304, V16.5.0, 27 September 2021, discloses background information that are useful to understand the context of the invention, as defined in the appended claims.

"3 Generation Partnership Project; Technical Specification Group Radio Access Network; Evolved Universal Terrestrial Radio Access (E-UTRA); User Equipment (UE) procedures in idle mode (Release 16)" specifies the Access Stratum (AS) part of the Idle Mode procedures applicable to a UE. The non-access stratum (NAS) part of Idle mode procedures and processes is specified in TS 23.122 [5].

### SUMMARY

The invention is set out in the appended set of claims.

According to the method and apparatus for detection, the terminal and the storage medium provided in the embodiments of the disclosure, a terminal measures, in a cell selected to camp on after completing cell selection or reselection in cells configured with a first signal or channel, signal qualities or signal strengths of a current serving cell. The measurement includes measurement based on the first signal or channel and measurement based on an inherent measurement resource of a serving cell. At least one transmission signal or channel of the first signal or channel has a correspondence with at least one transmission signal or channel of the inherent measurement resource of the serving cell. In a case that a detection result of at least one transmission signal or channel in the at least one transmission signal or channel of the first signal or channel meets a first condition, a transmission signal or channel with the best signal quality or the best signal strength is select from the at least one transmission signal or channel of the first signal or channel as a detection target. **In** a case that a detection result of none of the at least one transmission signal or channel of the first signal or channel meets the first condition, at least one of following is performed by measuring the at least one transmission signal or channel of the inherent measurement resource of the serving cell: cell camping, or screening out a target transmission signal or channel of the inherent measurement resource. The first condition represents one of: a transmission signal or channel of the first signal or channel is detected; a detected power of the transmission signal or channel is greater than or equal to a first threshold; a detected quality of the transmission signal or channel is greater than or equal to a second threshold; the detected power of the transmission signal or channel is greater than the first threshold; or the detected quality of the transmission signal or channel is greater than the second threshold. In the solution provided by the embodiments of the disclosure, a network side sends a signal or channel. For a dormant terminal, the signal or channel has both the function of keep alive and the function of wake up, so that the terminal only needs to detect this one signal, and determines, based on a correspondence between the signal and an inherent measurement resource, when the terminal needs to determine an operating state based on the inherent measurement resource, and when the terminal needs to determine the operating state based on the signal, thus greatly reducing the complexity of system design. Furthermore, terminal selection is completed and it is selected to monitor a second terminal. A first terminal measures signal qualities or signal strengths of the second terminal upon receiving first information from the second terminal. The first information indicates that the second terminal will transmit a second signal or channel, the measurement includes measurement based on the second signal or channel and measurement based on an inherent measurement resource from the second terminal, at least one transmission signal or channel of the second signal or channel has a correspondence with at least one transmission signal or channel of the inherent measurement resource of the second terminal. In a case that a detection result of at least one transmission signal or channel in the at least one transmission signal or channel of the second signal or channel meets a second condition, a transmission signal or channel with the best signal quality or the best signal strength is selected from the at least one transmission signal or channel of the second signal or channel as a detection target. In a case that a detection result of none of the at least one transmission signal or channel of the first signal or channel meets the second condition, a target transmission signal or channel of the inherent measurement resource is screened out by measuring the at least one transmission signal or channel of the inherent measurement resource of the second terminal. The second condition represents one of: a transmission signal or channel of the second signal or channel is detected; a detected power of the transmission signal or channel is greater than or equal to a seventh threshold; a detected quality of the transmission signal or channel is greater than or equal to an eighth threshold; the detected power of the transmission signal or channel is greater than the seventh threshold; or the detected quality of the transmission signal or channel is greater than the eighth threshold. In the solution provided by the embodiments of the disclosure, a terminal sends a signal or channel. For a dormant receiving terminal, the signal or channel has both the function of keep alive and the function of wake up, so that the receiving terminal only needs to detect this one signal, and determines, based on a correspondence between the signal and an inherent measurement resource, when the terminal needs to determine an operating state based on the inherent measurement resource, and when the terminal needs to determine the operating state based on the signal, thus greatly reducing the complexity of system design.

### BRIEF DESCRIPTION OF THE DRAWINGS

FIG. 1 illustrates a schematic flowchart of a method for detection according to an embodiment of the disclosure.
FIG. 2 illustrates a schematic diagram of another method for detection according to an embodiment of the disclosure.
FIG. 3 illustrates a schematic structural diagram of an apparatus for detection, which is not being part of the present disclosure.
FIG. 4 illustrates a schematic structural diagram of another apparatus, which is not being part of the present disclosure.
FIG. 5 illustrates a schematic structural diagram of a terminal according to an embodiment of the disclosure.

### DETAILED DESCRIPTION

The disclosure is further described in detail in conjunction with the drawings and embodiments.

In related art, an assistance module of a terminal decides, by monitoring existence of a power of the wake-up signal, whether there is a signal to be sent to the terminal subsequently. When a signal power exists, the assistance module instructs a communication module of the terminal to wake up to perform corresponding operations. Specifically, in an idle state, cell selection/reselection or paging monitoring may be performed. In a connected state, detection for a signal or channel assisted by the wake-up signal, such as a Physical Downlink Control Channel (PDCCH) in an active duration, may be performed. When there is no signal power, the terminal maintains dormant or in a node state, ignoring paging in a current paging transmission candidate location or subsequent paging transmission candidate locations, and/or ignoring detection for the PDCCH or a Physical Downlink Shared Channel (PDSCH).

On the other hand, the assistance module of the terminal further determines, through the power detection for the keep-alive signal, whether the terminal is within an effective coverage of the wake-up signal, that is, whether the wake-up signal keeps effective. If the assistance module fails to detect the keep-alive signal or detects that the power of the keep-alive signal is lower than a certain threshold, it is considered that the terminal is not within the effective coverage of the wake-up signal, and the assistance module notifies the communication module of the terminal to resume the cell reselection procedure in a normal idle state or to normally monitor paging according to a normal paging cycle, or to normally monitor the PDCCH, and that paging in any paging cycle can no longer be ignored, or any PDCCH in the PDCCH candidate locations that should belong to the active duration of the terminal according to a network side configuration can no longer be ignored. If the assistance module detects the keep-alive signal or detects that the power of the keep-alive signal is not lower than a certain threshold, it indicates that the wake-up signal keeps alive.

It can be seen from the above description that, in the related art, it is considered that the terminal needs to wake up if the power of the wake-up signal is detected. In order to avoid the uncertainty of behaviors of the terminal when the wake-up signal is not detected, the keep-alive signal is additionally introduced to distinguish ambiguity. The details are specifically as follows.
1) if the power of the keep-alive signal is detected and the power of the wake-up signal is detected, it indicates that the terminal needs to wake up.
2) if the power of the keep-alive signal is detected but no power of the wake-up signal is detected, it indicates that the terminal does not need to wake up.
3) if no power of the keep-alive signal is detected, it indicates that the assistance module can no longer be relied on to decide whether the terminal needs to wake up or maintain dormant.

On this basis, in various embodiments of the disclosure, a sending end (a network side, or a terminal in a sidelink (SL) scenario) sends a signal or channel (namely, there is no need to send a keep-alive signal indicating whether to keep alive and a wake-up signal for waking up respectively). For a dormant terminal, the signal or channel has both the function of keep alive and the function of wake up, so that the terminal only needs to detect this one signal, and defines, based on a correspondence between the signal and a system-inherent signal (namely, an inherent measurement resource), when the terminal needs to determine an operating state based on the system-inherent signal, and when the terminal needs to determine the operating state based on this signal, thus reducing the complexity of design.

For different sending ends sending the signal with both the keep alive function and the wake up function, the terminal employ different processing manners. The scheme of the embodiments of the disclosure will be described in detail for the different sending ends respectively.

Firstly, the scheme of the embodiments of the disclosure when the sending end includes the network side is described

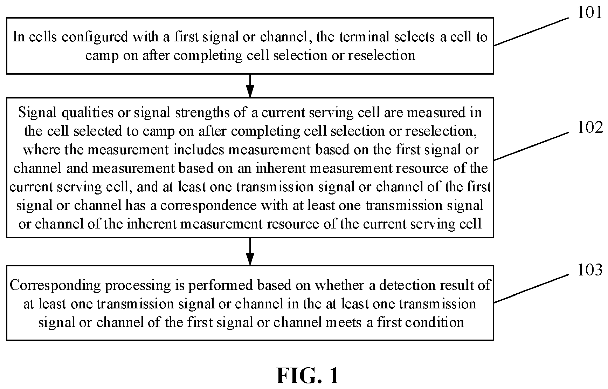

The embodiments of the disclosure provide a method for detection, applied to a terminal. As illustrated in FIG. 1, the method includes operations as follows.

Operation 101: in cells configured with a first signal or channel, the terminal selects a cell to camp on after completing cell selection or reselection.

Operation 102: signal qualities or signal strengths of a current serving cell are measured in the cell selected to camp on after completing cell selection or reselection. The measurement includes measurement based on the first signal or channel and measurement based on an inherent measurement resource of a serving cell. At least one transmission signal or channel of the first signal or channel has a correspondence with at least one transmission signal or channel of the inherent measurement resource of the serving cell.

Operation 103: in a case that a detection result of at least one transmission signal or channel in the at least one transmission signal or channel of the first signal or channel meets a first condition, a transmission signal or channel with the best signal quality or the best signal strength is select from the at least one transmission signal or channel of the first signal or channel as a detection target. In a case that a detection result of none of the at least one transmission signal or channel of the first signal or channel meets the first condition, at least one of following is performed by measuring the at least one transmission signal or channel of the inherent measurement resource of the serving cell: cell camping, or screening out a target transmission signal or channel of the inherent measurement resource.

The first condition represents one of: a transmission signal or channel of the first signal or channel is detected; a detected power of the transmission signal or channel is greater than or equal to a first threshold; a detected quality of the transmission signal or channel is greater than or equal to a second threshold; the detected power of the transmission signal or channel is greater than the first threshold; or the detected quality of the transmission signal or channel is greater than the second threshold.

In practical applications, the terminal may be referred to as User Equipment (UE), or may be referred to as a user.

At operation 101, the cell selected to camp on by the terminal is configured with the first signal or channel. Correspondingly, the current serving cell is the cell selected to camp on by the terminal.

Exemplarily, it is assumed that the first cell is configured with the first signal or channel. After the terminal completes cell selection or reselection and selects to camp on the first cell, the terminal measures signal qualities or signal strengths of the first cell. The measurement includes measurement based on the first signal or channel and measurement based on an inherent measurement resource of the first cell.

In a case that a detected power of at least one transmission signal or channel in at least one transmission signal or channel of the first signal or channel meets a first condition, the terminal selects a transmission signal or channel with the best signal quality or the best signal strength from the at least one transmission signal or channel of the first signal or channel as a detection target. In a case that a detected power of none of the at least one transmission signal or channel of the first signal or channel meets the first condition, at least one of following is performed by the at least one transmission signal or channel of the inherent measurement resource of the first cell: cell camping, and/or screening out a target transmission signal or channel of the inherent measurement resource.

In an embodiment, the inherent measurement resource includes signals and/or channels that are usable for measurement of the terminal and have to be sent when a network side is capable of providing a service for the terminal.

In particular, the inherent measurement resource includes one of: a reference signal for synchronization in a system; a reference signal and/or channel for synchronization and primary system information indication in the system; or a reference signal configured by the system and usable for idle-state measurement.

In communication systems with different standards, the name of the reference signal may be different. For example, in a 5G system, the reference signal and/or channel for synchronization and primary system information indication in the system includes a Synchronization Signal Block (SSB), which is not limited herein.

The first signal or channel is used for the terminal to perform detection after camping on a cell and to determine, based on a detection result, whether subsequent monitoring or detection for transmission signals or channels of an inherent measurement resource of the cell camped on, and/or subsequent detection or monitoring for a scheduling signal (which may also be referred to as a scheduling indication signal) are needed.

Particularly, in a case that at least one transmission signal or channel in the at least one transmission signal or channel of the first signal or channel meets the first condition, detection for any transmission signal or channel of the inherent measurement resource, and/or the detection or monitoring for the scheduling signal (for example, a PDCCH) are not needed.

Correspondingly, in a case that none of the at least one transmission signal or channel of the first signal or channel meets the first condition, the detection for the transmission signals or channels of the inherent transmission resource, screening for the at least one transmission signal or channel of the inherent measurement resource, and/or the detection or monitoring for the scheduling signal are needed.

The event that at least one transmission signal or channel of the first signal or channel has a correspondence with at least one transmission signal or channel of the inherent measurement resource of the serving cell means that: some one of the at least one transmission signal or channel of the first signal or channel has a QCL relationship with some one of at least one transmission signal or channel of the inherent measurement resource. The corresponding relationship may be one-to-one correspondence; namely, one transmission signal or channel of the first signal or channel corresponds to one transmission signal or channel of the inherent measurement resource. The corresponding relationship may also be one-to-multiple correspondence; namely, one transmission signal or channel of the first signal or channel corresponds to multiple transmission signals or channels of the inherent measurement resource. That is to say, one of the at least one transmission signal or channel of the first signal or channel has a QCL relationship with at least one transmission signal or channel of the inherent measurement resource.

Here, in practical applications, the QCL relationship may be indicated by a Transmission Configuration Indicator (TCI).

At operation 103, the terminal performs corresponding processing based on whether a detection result of at least one transmission signal or channel in the at least one transmission signal or channel of the first signal or channel meets the first condition.

In a case that a detection result of at least one transmission signal or channel in the at least one transmission signal or channel of the first signal or channel meets the first condition, it indicates that the terminal is still within the coverage of the current serving cell, and there is no need to perform cell selection or reselection. It is only needed to perform beam selection or reselection based on the first signal or channel, that is, the terminal selects a transmission signal or channel with the best signal quality or the best signal strength from the at least one transmission signal or channel of the first signal or channel as a detection target. The terminal may maintain dormant. At this time, there is no data need to be received and detected by the terminal.

Correspondingly, in a case that a detection result of none of the at least one transmission signal or channel of the first signal or channel meets the first condition, it indicates that the terminal may be not within the coverage of the current serving cell. At this time, the terminal may not continue the detection for the first signal or channel on the current beam, and it is only needed to perform cell camping and/or to screen out a target transmission signal or channel of the inherent measurement resource based on measurement of the at least one transmission signal or channel of the inherent measurement resource. Specifically, the terminal may firstly determine whether a current location of the terminal still belongs to the current serving cell based on the measurement of the at least one transmission signal or channel of the inherent measurement resource, that is, whether the terminal is still within the coverage of the current serving cell is firstly determined. When the terminal still belongs to the current serving cell, the target transmission signal or channel of the inherent measurement resource is screened out, and the terminal needs to exit the dormant state (at this time, the terminal considers that receiving and detection needs to be performed, or considers that the terminal is no longer within the coverage of the first signal or channel). If it is determined, based on the measurement of at least one transmission signal or channel of the inherent measurement resource, that the current cell signal strength at the current location of the terminal has met the cell reselection condition (for example, lower than a preset threshold), the terminal needs to perform cell reselection.

In practical applications, the first threshold refers to a detection power threshold that is indicated by the communication system and needs to be reached when the transmission signal or channel corresponding to the first signal or channel can be used as an effective reference. The first threshold may be set as required.

The second threshold refers to a detection quality (also known as detection strength) threshold that is indicated by the communication system and needs to be reached when the transmission signal or channel corresponding to the first signal or channel can be used as an effective reference. The second threshold may be set as required.

In an embodiment, when the terminal screens out the target transmission signal or channel of the inherent measurement resource by measuring the at least one transmission signal or channel of the inherent measurement resource of the serving cell: in a case that a received signal strength of the selected transmission signal or channel does not meet a third threshold and/or a received signal quality of the selected transmission signal or channel does not meet a fourth threshold, the terminal needs to detect or monitor at least one transmission signal or channel corresponding to the inherent measurement resource, and/or to detect or monitor the scheduling signal, and does not need to detect the at least one transmission signal or channel of the first signal of the serving cell.

Correspondingly, in a case that the received signal strength of the selected transmission signal or channel meets a fifth threshold and/or the received signal quality of the selected transmission signal or channel meets a sixth threshold, a transmission signal or channel of the first signal corresponding to a transmission signal or channel of the inherent measurement resource of the serving cell is detected, and it is determined, based on a detection result, whether detection or monitoring for transmission signals or channels of the inherent transmission resource of the serving cell, and/or the detection or monitoring for the scheduling signal are needed.

Through the above operations, it can be ensured that the terminal may maintain dormant when having determined that no data need to be received and detected, and it can be ensured that the communication module can be waked up in a timely manner when it is determined that the terminal is not in the serving cell or there is data need to be received and detected.

In practical applications, the third threshold may be same as or may be different from the fifth threshold. The fourth threshold may be same as or may be different from the sixth threshold. Furthermore, the third threshold, the fourth threshold, the fifth threshold and the sixth threshold may all be set as required.

For the first condition, one of the five conditions may be selected as needed when implementing the scheme of the embodiments of the disclosure.

According to the method for detection provided in the embodiments of the disclosure, a terminal measures, in a cell selected to camp on after completing cell selection or reselection in cells configured with a first signal or channel, signal qualities or signal strengths of a current serving cell. The measurement includes measurement based on the first signal or channel and measurement based on an inherent measurement resource of a serving cell. At least one transmission signal or channel of the first signal or channel has a correspondence with at least one transmission signal or channel of the inherent measurement resource of the serving cell. In a case that a detection result of at least one transmission signal or channel in the at least one transmission signal or channel of the first signal or channel meets a first condition, a transmission signal or channel with the best signal quality or the best signal strength is select from the at least one transmission signal or channel of the first signal or channel as a detection target. In a case that a detection result of none of the at least one transmission signal or channel of the first signal or channel meets the first condition, at least one of following is performed by measuring the at least one transmission signal or channel of the inherent measurement resource of the serving cell: cell camping, or screening out a target transmission signal or channel of the inherent measurement resource. The first condition represents one of: a transmission signal or channel of the first signal or channel is detected; a detected power of the transmission signal or channel is greater than or equal to a first threshold; a detected quality of the transmission signal or channel is greater than or equal to a second threshold; the detected power of the transmission signal or channel is greater than the first threshold; or the detected quality of the transmission signal or channel is greater than the second threshold. In the solution provided by the embodiments of the disclosure, a network side sends a signal or channel. For a dormant terminal, the signal or channel has both the function of keep alive and the function of wake up, so that the terminal only needs to detect this one signal, and determines, based on a correspondence between the signal and an inherent measurement resource, when the terminal needs to determine an operating state based on the inherent measurement resource, and when the terminal needs to determine the operating state based on the signal, thus greatly reducing the complexity of system design.

Next, the scheme of the embodiments of the disclosure when the sending end includes a terminal in a terminal-to-terminal link is described

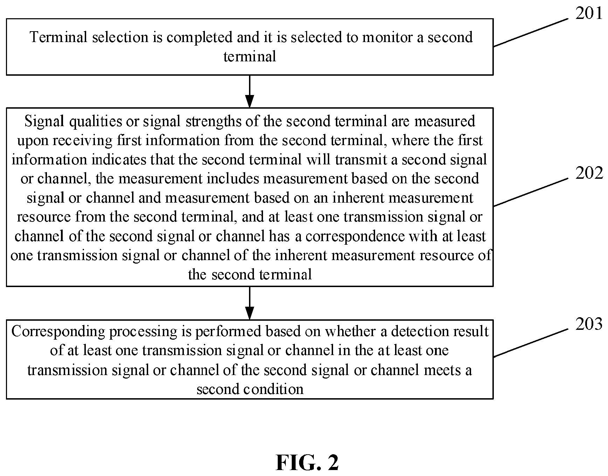

The embodiments of the disclosure further provide a method for detection, applied to a first terminal, namely applied to a terminal in a terminal-to-terminal link, namely applied to a terminal in an SL scenario. As illustrated in FIG. 2, the method includes operations as follows.

Operation 201: terminal selection is completed and it is selected to monitor a second terminal.

Operation 202: signal qualities or signal strengths of the second terminal is measured upon receiving first information from the second terminal. The first information indicates that the second terminal will transmit a second signal or channel, the measurement includes measurement based on the second signal or channel and measurement based on an inherent measurement resource from the second terminal, at least one transmission signal or channel of the second signal or channel has a correspondence with at least one transmission signal or channel of the inherent measurement resource of the second terminal.

Operation 203: in a case that a detection result of at least one transmission signal or channel in the at least one transmission signal or channel of the second signal or channel meets a second condition, a transmission signal or channel with the best signal quality or the best signal strength is selected from the at least one transmission signal or channel of the second signal or channel as a detection target. In a case that a detection result of none of the at least one transmission signal or channel of the first signal or channel meets the second condition, a target transmission signal or channel of the inherent measurement resource is screened out by measuring the at least one transmission signal or channel of the inherent measurement resource of the second terminal.

The second condition represents one of: a transmission signal or channel of the second signal or channel is detected; a detected power of the transmission signal or channel is greater than or equal to a seventh threshold; a detected quality of the transmission signal or channel is greater than or equal to an eighth threshold; the detected power of the transmission signal or channel is greater than the seventh threshold; or the detected quality of the transmission signal or channel is greater than the eighth threshold.

In practical applications, the terminal may be referred to as UE, or may be referred to as a user.

In an embodiment, the inherent measurement resource includes one of: a reference signal for synchronization in a terminal-to-terminal link, namely an SL Synchronization Signal (S-SS); a reference signal and/or channel for synchronization and primary system information indication in the terminal-to-terminal link, namely a reference signal and/or channel for synchronization and primary system information indication in the SL; or a reference signal configured by the system (namely, the network side, such as base station) and usable for idle-state measurement.

In communication systems with different standards, the name of the reference signal may be different. For example, in a 5G system, the reference signal and/or channel for synchronization and primary system information indication in the terminal-to-terminal link includes an SL SSB, which is not limited herein.

The second signal or channel is used for the first terminal to perform detection after performing terminal selection and to determine, based on a detection result, whether subsequent monitoring or detection for transmission signals or channels of an inherent measurement resource of the second terminal, and/or subsequent detection or monitoring for a scheduling signal (which may also be referred to as a scheduling indication signal) are needed.

In particular, in a case that at least one transmission signal or channel in the at least one transmission signal or channel of the second signal or channel meets the second condition, detection for any transmission signal or channel of the inherent measurement resource, and/or the detection or monitoring for the scheduling signal are not needed.

Correspondingly, in a case that none of the at least one transmission signal or channel of the second signal or channel meets the second condition, the detection for the transmission signals or channels of the inherent transmission resource, screening for the at least one transmission signal or channel of the inherent measurement resource, and/or the detection or monitoring for the scheduling signal are needed.

The event that at least one transmission signal or channel of the second signal or channel has a correspondence with at least one transmission signal or channel of the inherent measurement resource of the second terminal means that: some one of the at least one transmission signal or channel of the second signal or channel has a QCL relationship with some one of at least one transmission signal or channel of the inherent measurement resource. The corresponding relationship may be one-to-one correspondence; namely, one transmission signal or channel of the second signal or channel corresponds to one transmission signal or channel of the inherent measurement resource. The corresponding relationship may also be one-to-multiple correspondence; namely, one transmission signal or channel of the second signal or channel corresponds to multiple transmission signals or channels of the inherent measurement resource. That is to say, one of the at least one transmission signal or channel of the second signal or channel has a QCL relationship with at least one transmission signal or channel of the inherent measurement resource.

At operation 203, the first terminal performs corresponding processing based on whether a detection result of at least one transmission signal or channel in the at least one transmission signal or channel of the second signal or channel meets the second condition.

In a case that a detection result of at least one transmission signal or channel in the at least one transmission signal or channel of the second signal or channel meets the second condition, it indicates that the first terminal is still within the coverage of the second signal or channel, and selection for multiple transmission signals or channels of the inherent measurement resource is no need. It is only needed to perform selection or reselection based on the second signal or channel, that is, the first terminal selects a transmission signal or channel with the best signal quality or the best signal strength from the at least one transmission signal or channel of the second signal or channel as a detection target. The first terminal may maintain dormant. At this time, there is no data need to be received and detected by the first terminal.

Correspondingly, in a case that a detection result of none of the at least one transmission signal or channel of the second signal or channel meets the second condition, it indicates that the first terminal may be not within the coverage of the second signal or channel. At this time, the first terminal may not continue the detection for the second signal or channel on the current beam, and a target transmission signal or channel of the inherent measurement resource needs to be screened out based on measurement of the at least one transmission signal or channel of the inherent measurement resource.

In practical applications, the seventh threshold refers to a detection power threshold that is indicated by the communication system or the second terminal and needs to be reached when the transmission signal or channel corresponding to the second signal or channel can be used as an effective reference. The seventh threshold may be set as required.

The eighth threshold refers to a detection quality (also known as detection strength) threshold that is indicated by the communication system and needs to be reached when the transmission signal or channel corresponding to the second signal or channel can be used as an effective reference. The eighth threshold may be set as required.

**In** an embodiment, when the first terminal screens out the target transmission signal or channel of the inherent measurement resource by measuring the at least one transmission signal or channel of the inherent measurement resource of the second terminal: in a case that a received signal strength of the selected transmission signal or channel does not meet a ninth threshold and/or a received signal quality of the selected transmission signal or channel does not meet a tenth threshold, the first terminal needs to detect or monitor at least one transmission signal or channel corresponding to the inherent measurement resource of the second terminal, and/or to detect or monitor the scheduling signal, and does not need to detect the at least one transmission signal or channel of the second signal of the second terminal.

Correspondingly, in a case that the received signal strength of the selected transmission signal or channel meets an eleventh threshold and/or the received signal quality of the selected transmission signal or channel meets a twelfth threshold, a transmission signal or channel of the second signal corresponding to a transmission signal or channel of the inherent measurement resource of the second terminal is detected, and it is determined, based on a detection result, whether detection or monitoring for transmission signals or channels of the inherent transmission resource of the second terminal, and/or the detection or monitoring for the scheduling signal are needed.

Through the above operations, it can be ensured that the terminal can maintain dormant when having determined that no data need to be received and detected, and the communication module can be waked up in a timely manner when it is determined that there is data need to be received and detected.

In practical applications, the ninth threshold may be same as or may be different from the eleventh threshold. The tenth threshold may be same as or may be different from the twelfth threshold. Furthermore, the ninth threshold, the tenth threshold, the eleventh threshold and the twelfth threshold may all be set required.

In the method for detection according to the embodiments of the disclosure, terminal selection is completed and it is selected to monitor a second terminal. A first terminal measures signal qualities or signal strengths of the second terminal upon receiving first information from the second terminal. The first information indicates that the second terminal will transmit a second signal or channel, the measurement includes measurement based on the second signal or channel and measurement based on an inherent measurement resource from the second terminal, at least one transmission signal or channel of the second signal or channel has a correspondence with at least one transmission signal or channel of the inherent measurement resource of the second terminal. In a case that a detection result of at least one transmission signal or channel in the at least one transmission signal or channel of the second signal or channel meets a second condition, a transmission signal or channel with the best signal quality or the best signal strength is selected from the at least one transmission signal or channel of the second signal or channel as a detection target. In a case that a detection result of none of the at least one transmission signal or channel of the first signal or channel meets the second condition, a target transmission signal or channel of the inherent measurement resource is screened out by measuring the at least one transmission signal or channel of the inherent measurement resource of the second terminal. The second condition represents one of: a transmission signal or channel of the second signal or channel is detected; a detected power of the transmission signal or channel is greater than or equal to a seventh threshold; a detected quality of the transmission signal or channel is greater than or equal to an eighth threshold; the detected power of the transmission signal or channel is greater than the seventh threshold; or the detected quality of the transmission signal or channel is greater than the eighth threshold. In the solution provided by the embodiments of the disclosure, a terminal sends a signal or channel. For a dormant receiving terminal, the signal or channel has both the function of keep alive and the function of wake up, so that the receiving terminal only needs to detect this one signal, and determines, based on a correspondence between the signal and an inherent measurement resource, when the terminal needs to determine an operating state based on the inherent measurement resource, and when the terminal needs to determine the operating state based on the signal, thus greatly reducing power consumption of the terminal.

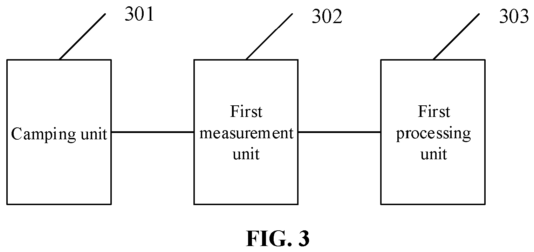

In order to implement the method according to the embodiments of the disclosure, the embodiments of the disclosure further provide an apparatus for detection, arranged on a terminal. As illustrated in FIG. 3, the apparatus includes a first measurement unit 302 and a first processing unit 303.

The first measurement unit 302 is configured to measure, in a cell selected to camp on by a terminal after completing cell selection or reselection in cells configured with a first signal or channel, signal qualities or signal strengths of a current serving cell. The measurement includes measurement based on the first signal or channel and measurement based on an inherent measurement resource of a serving cell. At least one transmission signal or channel of the first signal or channel has a correspondence with at least one transmission signal or channel of the inherent measurement resource of the serving cell.

The first processing unit 303 is configured to: in a case that a detection result of at least one transmission signal or channel in the at least one transmission signal or channel of the first signal or channel meets a first condition, select, from the at least one transmission signal or channel of the first signal or channel, a transmission signal or channel with the best signal quality or the best signal strength as a detection target. The first processing unit is configured to: in a case that a detection result of none of the at least one transmission signal or channel of the first signal or channel meets the first condition, perform cell camping and/or screen out a target transmission signal or channel of the inherent measurement resource by measuring the at least one transmission signal or channel of the inherent measurement resource of the serving cell. The first condition represents one of: a transmission signal or channel of the first signal or channel is detected; a detected power of the transmission signal or channel is greater than or equal to a first threshold; a detected quality of the transmission signal or channel is greater than or equal to a second threshold; the detected power of the transmission signal or channel is greater than the first threshold; or the detected quality of the transmission signal or channel is greater than the second threshold.

In an embodiment, as illustrated in FIG. 3, the apparatus may further include a camping unit 301.

The camping unit 301 is configured such that in cells configured with a first signal or channel, the terminal selects a cell to camp on after completing cell selection or reselection.

The first processing unit 303 is further configured to: in a case that a received signal strength of the selected transmission signal or channel does not meet a third threshold and/or a received signal quality of the selected transmission signal or channel does not meet a fourth threshold, detect or monitor at least one transmission signal or channel corresponding to the inherent measurement resource, and/or detect or monitor the scheduling signal, and not detect the at least one transmission signal or channel of the first signal of the serving cell.

Alternatively, the first processing unit 303 is further configured to: in a case that the received signal strength of the selected transmission signal or channel meets a fifth threshold and/or the received signal quality of the selected transmission signal or channel meets a sixth threshold, detect a transmission signal or channel of the first signal corresponding to a transmission signal or channel of the inherent measurement resource of the serving cell, and determine, based on a detection result, whether detection or monitoring for transmission signals or channels of the inherent transmission resource of the serving cell, and/or whether the detection or monitoring for the scheduling signal are needed.

In practical applications, the camping unit 301, the first measurement unit 302 and the second processing unit 303 may be implemented by a processor in the device for detection in conjunction with a communication interface.

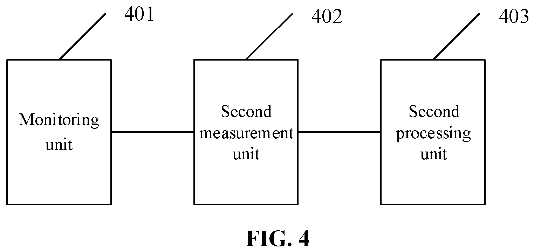

In order to implement the method according to the embodiments of the disclosure, the embodiments of the disclosure further provide an apparatus for detection, arranged on a terminal. As illustrated in FIG. 4, the apparatus includes a first measurement unit 302 and a first processing unit 303.

The monitoring unit 401 is configured to complete terminal selection and select to monitor a second terminal.

The second measurement unit 402 is configured to measure signal qualities or signal strengths of the second terminal upon receiving first information from the second terminal. The first information indicates that the second terminal will transmit a second signal or channel, the measurement includes measurement based on the second signal or channel and measurement based on an inherent measurement resource from the second terminal, at least one transmission signal or channel of the second signal or channel has a correspondence with at least one different transmission signal or channel of the inherent measurement resource of the second terminal.

The second processing unit 403 is configured to: in a case that a detection result of at least one transmission signal or channel in the at least one transmission signal or channel of the second signal or channel meets a second condition, select, from the at least one transmission signal or channel of the second signal or channel, a transmission signal or channel with the best signal quality or the best signal strength as a detection target; and in a case that a detection result of none of the at least one transmission signal or channel of the first signal or channel meets the second condition, screen out a target transmission signal or channel of the inherent measurement resource by measuring the at least one transmission signal or channel of the inherent measurement resource of the second terminal. The second condition represents one of: a transmission signal or channel of the second signal or channel is detected; a detected power of the transmission signal or channel is greater than or equal to a seventh threshold; a detected quality of the transmission signal or channel is greater than or equal to an eighth threshold; the detected power of the transmission signal or channel is greater than the seventh threshold; or the detected quality of the transmission signal or channel is greater than the eighth threshold.

In an embodiment, the second processing unit 403 is further configured to: in a case that a received signal strength of the selected transmission signal or channel does not meet a ninth threshold and/or a received signal quality of the selected transmission signal or channel does not meet a tenth threshold, detect or monitor at least one transmission signal or channel corresponding to the inherent measurement resource of the second terminal, and/or detect or monitor the scheduling signal, and not detect the at least one transmission signal or channel of the second signal of the second terminal.

Alternatively, the second processing unit 403 is further configured to: in a case that the received signal strength of the selected transmission signal or channel meets an eleventh threshold and/or the received signal quality of the selected transmission signal or channel meets a twelfth threshold, detect a transmission signal or channel of the second signal corresponding to a transmission signal or channel of the inherent measurement resource of the second terminal, and determine, based on a detection result, whether detection or monitoring for transmission signals or channels of the inherent transmission resource of the second terminal, and/or the detection or monitoring for the scheduling signal are needed.

In practical applications, the monitoring unit 401, the second measurement unit 402 and the second processing unit 403 may be implemented by a processor in the device for detection in conjunction with a communication interface.

It is to be noted that for the above apparatus for detection according to the embodiments, the division of the program modules above is used as an example for description of the detection only. In practical applications, the processing may be allocated to and accomplished by different program modules according to demands. Namely, the inner structure of the apparatus may be divided into different program modules to accomplish all or part of the processing described above. Additionally, the above apparatus for detection according to the embodiments belong to the same concept as the method for detection, and details of the particular implementation process of the apparatus may refer to the method embodiments, which will not be described here again.

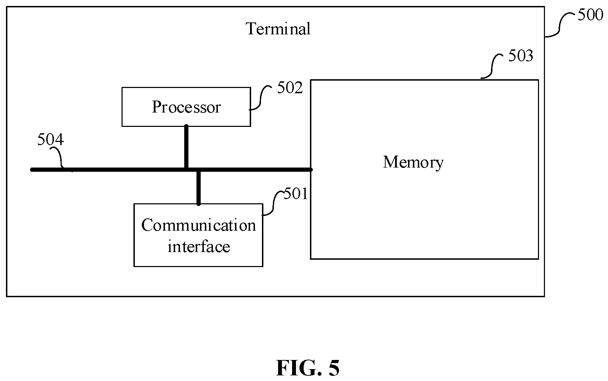

Based on the hardware implementation of the above program modules, and in order to implement the method according to the embodiments of the disclosure, the embodiments of the disclosure further provide a terminal. As illustrated in FIG. 5, the terminal 500 includes a communication interface 501, a processor 502 and a memory 503.

The communication interface 501 is capable of information exchange with another terminal and/or a network side.

The processor 502 is connected to the communication interface 501 to realize information exchange with another terminal and/or the network side for executing the method provided by the above one or more technical solutions when running a computer program.

The memory 503 has the computer program thereon.

In particular, when the sending end includes the network side, the processor 502 is configured to: measure, by the communication interface 501 in a cell selected to camp on by the terminal 500 after completing cell selection or reselection in cells configured with a first signal or channel, signal qualities or signal strengths of a current serving cell. The measurement includes measurement based on the first signal or channel and measurement based on an inherent measurement resource of a serving cell. At least one transmission signal or channel of the first signal or channel has a correspondence with at least one transmission signal or channel of the inherent measurement resource of the serving cell. The processor 502 is configured to: in a case that a detection result of at least one transmission signal or channel in the at least one transmission signal or channel of the first signal or channel meets a first condition, select, from the at least one transmission signal or channel of the first signal or channel, a transmission signal or channel with the best signal quality or the best signal strength as a detection target. The processor 502 is configured to: in a case that a detection result of none of the at least one transmission signal or channel of the first signal or channel meets the first condition, perform cell camping and/or screen out a target transmission signal or channel of the inherent measurement resource by measuring the at least one transmission signal or channel of the inherent measurement resource of the serving cell. The first condition represents one of: a transmission signal or channel of the first signal or channel is detected; a detected power of the transmission signal or channel is greater than or equal to a first threshold; a detected quality of the transmission signal or channel is greater than or equal to a second threshold; the detected power of the transmission signal or channel is greater than the first threshold; or the detected quality of the transmission signal or channel is greater than the second threshold.

In an embodiment, the processor 502 is further configured to: in a case that a received signal strength of the selected transmission signal or channel does not meet a third threshold and/or a received signal quality of the selected transmission signal or channel does not meet a fourth threshold, detect or monitor at least one transmission signal or channel corresponding to the inherent measurement resource, and/or detect or monitor the scheduling signal, and not detect the at least one transmission signal or channel of the first signal of the serving cell.

Alternatively, the processor 502 is further configured to: in a case that the received signal strength of the selected transmission signal or channel meets a fifth threshold and/or the received signal quality of the selected transmission signal or channel meets a sixth threshold, detect a transmission signal or channel of the first signal corresponding to a transmission signal or channel of the inherent measurement resource of the serving cell, and determine, based on a detection result, whether detection or monitoring for transmission signals or channels of the inherent transmission resource of the serving cell, and/or the detection or monitoring for the scheduling signal are needed.

When the sending end includes a terminal in a terminal-to-terminal link, the processor 502 is configured to: complete terminal selection and selects to monitor a second terminal; measure, by the communication interface 501, signal qualities or signal strengths of the second terminal upon receiving first information from the second terminal through the communication interface 501. The first information indicates that the second terminal will transmit a second signal or channel, the measurement includes measurement based on the second signal or channel and measurement based on an inherent measurement resource from the second terminal, at least one transmission signal or channel of the second signal or channel has a correspondence with at least one different transmission signal or channel of an inherent measurement resource of the second terminal. The processor 502 is configured to: in a case that a detection result of at least one transmission signal or channel in the at least one transmission signal or channel of the second signal or channel meets a second condition, select, from the at least one transmission signal or channel of the second signal or channel, a transmission signal or channel with the best signal quality or the best signal strength as a detection target. The processor 502 is configured to: in a case that a detection result of none of the at least one transmission signal or channel of the first signal or channel meets the second condition, screen out a target transmission signal or channel of the inherent measurement resource by measuring the at least one transmission signal or channel of the inherent measurement resource of the second terminal. The second condition represents one of: a transmission signal or channel of the second signal or channel is detected; a detected power of the transmission signal or channel is greater than or equal to a seventh threshold; a detected quality of the transmission signal or channel is greater than or equal to an eighth threshold; the detected power of the transmission signal or channel is greater than the seventh threshold; or the detected quality of the transmission signal or channel is greater than the eighth threshold.

**In** an embodiment, the processor 502 is further configured to: in a case that a received signal strength of the selected transmission signal or channel does not meet a ninth threshold and/or a received signal quality of the selected transmission signal or channel does not meet a tenth threshold, detect or monitor at least one transmission signal or channel corresponding to the inherent measurement resource of the second terminal, and/or detect or monitor the scheduling signal, and not detect the at least one transmission signal or channel of the second signal of the second terminal.

Alternatively, the processor 502 is further configured to: in a case that the received signal strength of the selected transmission signal or channel meets an eleventh threshold and/or the received signal quality of the selected transmission signal or channel meets a twelfth threshold, detect a transmission signal or channel of the second signal corresponding to a transmission signal or channel of the inherent measurement resource of the second terminal, and determine, based on a detection result, whether detection or monitoring for transmission signals or channels of the inherent transmission resource of the second terminal, and/or the detection or monitoring for the scheduling signal are needed.

It should be noted that the specific processing procedures of the processor 502 and the communication interface 501 may be understood with reference to the above method.

Of course, in practical applications, various components in the terminal 500 are coupled together through a bus system 504. It may be understood that the bus system 504 is used for realizing the connection and communication between the components. Besides a data bus, the bus system 504 further includes a power bus, a control bus and a state signal bus. However, for clarity of description, the buses are all signed as the bus system 504 in FIG. 5.

The memory 503 in the embodiments of the disclosure is used to store various types of data to support the operation of the terminal 500. Examples of such data include any computer program for operation on terminal 500.

The method disclosed in above embodiments of the disclosure may be applied to the processor 502, or may be implemented by the processor 502. The processor 502 may be an integrated circuit chip, and has the capability of signal processing. During implementation, the various operations of in the above method may be completed by an integrated logic circuit in hardware form or instructions in software form in the processor 502. The above processor 502 may be a general-purpose processor, a Digital Signal Processor (DSP), or other programmable logic devices, discrete gates or transistor logic devices, discrete hardware components and so on. The processor 502 may implement or perform the various methods, operations or logic blocks disclosed in the embodiments of the disclosure. The universal processor may be a microprocessor or any conventional processor and the like. The operations of the methods disclosed in combination with the embodiments of the disclosure may be directly embodied as being performed and completed by a hardware decoding processor, or being performed and completed by a combination of hardware and software modules in a decoding processor. The soft modules may be located in a storage medium, and the storage medium is in the memory 503. The processor 502 reads information from the memory 503 to implement operations of the above methods in combination with the hardware.

In an exemplary embodiment, the terminal 500 may be implemented by one or more Application Specific Integrated Circuit (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), Microprocessors, or other electronic elements, to execute the method above.

It may be understood that the memory 503 in the embodiments of the disclosure may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiments of the disclosure is intended to include but not limited to memories of these and any other suitable types.

In an exemplary embodiment, embodiments of the disclosure further provide a storage medium, namely a computer storage medium, in particular, a computer-readable storage medium, for example the memory 503 including a computer program. The computer program may be executed by the processor 502 of the terminal 500, to accomplish the operations of the above method. The computer-readable storage medium may be such as an FRAM, an ROM, a PROM, an EPROM, an EEPROM, a flash drive, a magnetic surface memory, an optical disc, or a CD-ROM.

It should be noted that "first", "second", etc. are used to distinguish similar objects, and do not necessarily describe a specific sequence or ranking order.

Additionally, the technical solutions disclosed herein may be arbitrarily without conflict.

Described above are merely preferred embodiments of the disclosure, and are not used to limit the scope of protection of the disclosure.

## Claims

1. A method for detection, implemented by a terminal, **characterized in that** the method comprises:
measuring (102), in a cell selected to camp on after completing (101) cell selection or reselection in cells configured with a first signal or channel, signal qualities or signal strengths of a cell currently selected by the terminal, wherein the measurement comprises measurement based on the first signal or channel and/or measurement based on an inherent measurement resource of the cell currently selected by the terminal, wherein at least one transmission signal or channel of the first signal or channel has a correspondence with at least one transmission signal or channel of the inherent measurement resource of the cell currently selected by the terminal;
when a detection result of at least one transmission signal or channel in the at least one transmission signal or channel of the first signal or channel meets a first condition, selecting (103), from the at least one transmission signal or channel of the first signal or channel, a transmission signal or channel with the best signal quality or the best signal strength as a detection target; and
when a detection result of none of the at least one transmission signal or channel of the first signal or channel meets the first condition, performing (103) cell camping and/or screening out a target transmission signal or channel of the inherent measurement resource by measuring the at least one transmission signal or channel of the inherent measurement resource of the cell currently selected by the terminal;
wherein the first condition represents one of:
a transmission signal or channel of the first signal or channel is detected;
a detected power of the transmission signal or channel is greater than or equal to a first threshold;
a detected quality of the transmission signal or channel is greater than or equal to a second threshold;
the detected power of the transmission signal or channel is greater than the first threshold; or
the detected quality of the transmission signal or channel is greater than the second threshold,
wherein the inherent measurement resource comprises signals and/or channels that are usable for measurement of the terminal and have to be sent when a network side is capable of providing a service for the terminal,
wherein the inherent measurement resource comprises one of:
a reference signal for synchronization in a system;
a reference signal and/or channel for synchronization and primary system information indication in the system; or
a reference signal configured by the system and usable for idle-state measurement,
wherein one of the at least one transmission signal or channel of the first signal or channel has a Quasi Co-Location, QCL, relationship with at least one of the at least one transmission signal or channel of the inherent measurement resource,
wherein the first signal or channel is used for the terminal to perform detection after camping on a cell and to determine, based on a detection result, whether subsequent monitoring or detection for transmission signals or channels of an inherent measurement resource of the cell camped on, and/or subsequent detection or monitoring for a scheduling signal are needed.

2. The method of claim 1, wherein
when at least one transmission signal or channel in the at least one transmission signal or channel of the first signal or channel meets the first condition, detection for any transmission signal or channel of the inherent measurement resource, and/or the detection or monitoring for the scheduling signal are not needed; or
when none of the at least one transmission signal or channel of the first signal or channel meets the first condition, the detection for the transmission signals or channels of the inherent transmission resource, screening for the at least one transmission signal or channel of the inherent measurement resource, and/or the detection or monitoring for the scheduling signal are needed.

3. The method of any one of claims 1 to 2, wherein
when a received signal strength of the selected transmission signal or channel does not meet a third threshold and/or a received signal quality of the selected transmission signal or channel does not meet a fourth threshold, detection or monitoring for at least one transmission signal or channel corresponding to the inherent measurement resource, and/or the detection or monitoring for the scheduling signal are needed, and detection for at least one transmission signal or channel of the first signal of the cell currently selected by the terminal is not needed; or
when the received signal strength of the selected transmission signal or channel meets a fifth threshold and/or the received signal quality of the selected transmission signal or channel meets a sixth threshold, a transmission signal or channel of the first signal corresponding to a transmission signal or channel of the inherent measurement resource of the cell currently selected by the terminal is detected, and it is determined, based on a detection result, whether detection or monitoring for transmission signals or channels of the inherent transmission resource of the cell currently selected by the terminal, and/or the detection or monitoring for the scheduling signal are needed.

4. The method of claim 3, wherein at least one of the following applies:
the third threshold is same as or different from the fifth threshold; or
the fourth threshold is same as or different from the sixth threshold.

5. The method of claim 1, wherein the reference signal and/or channel for synchronization and primary system information indication in the system comprises a Synchronization Signal Block, SSB.

6. The method of claim 1, wherein one transmission signal or channel of the first signal or channel corresponds to one transmission signal or channel of the inherent measurement resource.

7. The method of claim 1, wherein one transmission signal or channel of the first signal or channel corresponds to multiple transmission signals or channels of the inherent measurement resource.

8. The method of claim 1, wherein the first threshold refers to a detection power threshold that is indicated by the communication system and needs to be reached when the transmission signal or channel corresponding to the first signal or channel is able to be used as an effective reference.

9. A method for detection, implemented by a first terminal, **characterized in that** the method comprises:
completing (201) terminal selection and selecting to monitor a second terminal;
measuring (202) signal qualities or signal strengths of the second terminal upon receiving first information from the second terminal, wherein the first information indicates that the second terminal will transmit a second signal or channel, the measurement comprises measurement based on the second signal or channel and/or measurement based on an inherent measurement resource from the second terminal, at least one transmission signal or channel of the second signal or channel has a correspondence with at least one transmission signal or channel of the inherent measurement resource of the second terminal;
when a detection result of at least one transmission signal or channel in the at least one transmission signal or channel of the second signal or channel meets a second condition, selecting (203), from the at least one transmission signal or channel of the second signal or channel, a transmission signal or channel with the best signal quality or the best signal strength as a detection target; and
when a detection result of none of the at least one transmission signal or channel of the first signal or channel meets the second condition, screening (203) out a target transmission signal or channel of the inherent measurement resource by measuring the at least one transmission signal or channel of the inherent measurement resource of the second terminal;
wherein the second condition represents one of:
a transmission signal or channel of the second signal or channel is detected;
a detected power of the transmission signal or channel is greater than or equal to a seventh threshold;
a detected quality of the transmission signal or channel is greater than or equal to an eighth threshold;
the detected power of the transmission signal or channel is greater than the seventh threshold; or
the detected quality of the transmission signal or channel is greater than the eighth threshold, wherein the inherent measurement resource comprises one of:
a reference signal for synchronization in a terminal-to-terminal link;
a reference signal and/or channel for synchronization and primary system information indication in the terminal-to-terminal link; or
a reference signal configured by the system and usable for idle-state measurement,
wherein one of the at least one transmission signal or channel of the second signal or channel has a Quasi Co-Location, QCL, relationship with at least one of the at least one transmission signal or channel of the inherent measurement resource,
wherein the second signal or channel is used for the first terminal to perform detection after performing terminal selection and to determine, based on a detection result, whether subsequent monitoring or detection for transmission signals or channels of an inherent measurement resource of the second terminal, and/or subsequent detection or monitoring for a scheduling signal are needed.

10. The method of claim 9, wherein
when at least one transmission signal or channel in the at least one transmission signal or channel of the second signal or channel meets the second condition, detection for any transmission signal or channel of the inherent measurement resource, and/or the detection or monitoring for the scheduling signal are not needed; or
when none of the at least one transmission signal or channel of the second signal or channel meets the second condition, the detection for the transmission signals or channels of the inherent transmission resource, screening for the at least one transmission signal or channel of the inherent measurement resource, and/or the detection or monitoring for the scheduling signal are needed.

11. The method of any one of claims 9 to 10, wherein
when a received signal strength of the selected transmission signal or channel does not meet a ninth threshold and/or a received signal quality of the selected transmission signal or channel does not meet a tenth threshold, detection or monitoring for at least one transmission signal or channel corresponding to the inherent measurement resource of the second terminal, and/or the detection or monitoring for the scheduling signal are needed, and detection for the at least one transmission signal or channel of the second signal of the second terminal is not needed; or
when the received signal strength of the selected transmission signal or channel meets an eleventh threshold and/or the received signal quality of the selected transmission signal or channel meets a twelfth threshold, a transmission signal or channel of the second signal corresponding to a transmission signal or channel of the inherent measurement resource of the second terminal is detected, and it is determined, based on a detection result, whether detection or monitoring for transmission signals or channels of the inherent transmission resource of the second terminal, and/or the detection or monitoring for the scheduling signal are needed.

12. The method of claim 9, wherein the reference signal and/or channel for synchronization and primary system information indication in the terminal-to-terminal link comprises an sidelink Synchronization Signal Block, SL SSB.

13. The method of claim 9, wherein one transmission signal or channel of the second signal or channel corresponds to one transmission signal or channel of the inherent measurement resource.

14. The method of claim 9, wherein one transmission signal or channel of the second signal or channel corresponds to multiple transmission signals or channels of the inherent measurement resource.

15. A terminal (500), comprising a processor (502) and a memory (503) for storing a computer program executable by the processor,
wherein the processor is configured to run the computer program to implement operations of the method of any one of claims 1 to 8, or to implement operations of the method of any one of claims 9 to 14.

## Patentansprüche

1. Verfahren für die Erkennung, implementiert durch ein Endgerät, **dadurch gekennzeichnet, dass** das Verfahren umfasst:
Messen (102) von Signalqualitäten oder Signalstärken einer gegenwärtig durch das Endgerät ausgewählten Zelle in einer Zelle, die ausgewählt wurde, um nach Abschluss (101) der Zellenauswahl oder -neuauswahl in Zellen, die mit einem ersten Signal oder Kanal konfiguriert sind, zu lagern, wobei die Messung eine Messung auf Grundlage des ersten Signals oder Kanals und/oder eine Messung auf Grundlage einer inhärenten Messressource der gegenwärtig durch das Endgerät ausgewählten Zelle umfasst, wobei wenigstens ein Übertragungssignal oder -kanal des ersten Signals oder Kanals eine Entsprechung mit wenigstens einem Übertragungssignal oder -kanal der inhärenten Messressource der gegenwärtig durch das Endgerät ausgewählten Zelle aufweist;
wenn ein Erkennungsergebnis wenigstens eines Übertragungssignals oder -kanals in dem wenigstens einen Übertragungssignal oder -kanal des ersten Signals oder Kanals eine erste Bedingung erfüllt, Auswählen (103), aus dem wenigstens einen Übertragungssignal oder -kanal des ersten Signals oder Kanals, eines Übertragungssignals oder -kanals mit der besten Signalqualität oder der besten Signalstärke als ein Erkennungsziel; und
wenn ein Erkennungsergebnis von keinem des wenigstens einen Übertragungssignals oder -kanals des ersten Signals oder Kanals die erste Bedingung erfüllt, Durchführen (103) von Zellenlagern und/oder Aussieben eines Zielübertragungssignals oder -kanals der inhärenten Messressource durch Messen des wenigstens einen Übertragungssignals oder -kanals der inhärenten Messressource der gegenwärtig von dem Endgerät ausgewählten Zelle;
wobei die erste Bedingung eines darstellt von:
ein Übertragungssignal oder -kanal des ersten Signals oder Kanals wird erkannt;
eine erkannte Leistung des Übertragungssignals oder -kanals ist größer oder gleich einer ersten Schwelle;
eine erkannte Qualität des Übertragungssignals oder -kanals ist größer oder gleich einer zweiten Schwelle;
die erkannte Leistung des Übertragungssignals oder -kanals ist größer als die erste Schwelle; oder
die erkannte Qualität des Übertragungssignals oder -kanals ist größer als die zweite Schwelle,
wobei die inhärente Messressource Signale und/oder Kanäle umfasst, die
die für die Messung des Endgeräts verwendet werden können und gesendet werden müssen, wenn eine Netzwerkseite in der Lage ist, einen Dienst für das Endgerät bereitzustellen,
wobei die inhärente Messressource eines der umfasst von: einem Referenzsignal für die Synchronisierung in einem System;
einem Referenzsignal und/oder einem Kanal für die Synchronisierung und die Angabe der primären Systeminformationen in dem System; oder
einem Referenzsignal, das von dem System konfiguriert wird und für die Messung des Ruhezustands verwendet werden kann, wobei eines des wenigstens einen Übertragungssignals oder -kanals des ersten Signals oder -kanals eine Quasi-Co-Location-Beziehung, QCL-Beziehung, zu wenigstens einem des Übertragungssignals oder -kanals der inhärenten Messressource aufweist,
wobei das erste Signal oder der erste Kanal für das Endgerät verwendet wird, um eine Erkennung nach dem Lagern in einer Zelle durchzuführen und auf Grundlage eines Erkennungsergebnisses zu bestimmen, ob eine nachfolgende Überwachung oder Erkennung für Übertragungssignale oder -kanäle einer inhärenten Messressource der Zelle, in der gelagert wird, und/oder eine nachfolgende Erkennung oder Überwachung für ein Planungssignal erforderlich ist.

2. Verfahren nach Anspruch 1, wobei
wenn wenigstens ein Übertragungssignal oder -kanal in dem wenigstens einen Übertragungssignal oder -kanal des ersten Signals oder Kanals die erste Bedingung erfüllt, die Erkennung für ein beliebiges Übertragungssignal oder einen beliebigen Kanal der inhärenten Messressource und/oder die Erkennung oder Überwachung für das Planungssignal nicht erforderlich ist; oder
wenn keines des wenigstens einen Übertragungssignals oder -kanals des ersten Signals oder Kanals die erste Bedingung erfüllt, die Erkennung für die Übertragungssignale oder - kanäle der inhärenten Übertragungsressource, das Sieben auf das wenigstens eine Übertragungssignal oder den wenigstens einen Übertragungskanal der inhärenten Messressource und/oder die Erkennung oder Überwachung für das Planungssignal erforderlich sind.

3. Verfahren nach einem der Ansprüche 1 bis 2, wobei
wenn eine Empfangssignalstärke des ausgewählten Übertragungssignals oder -kanals eine dritte Schwelle und/oder eine Empfangssignalqualität des ausgewählten Übertragungssignals oder -kanals eine vierte Schwelle nicht erreicht, die Erkennung oder Überwachung für wenigstens ein Übertragungssignal oder wenigstens einen Übertragungskanal, das/der der inhärenten Messressource entspricht, und/oder die Erkennung oder Überwachung für das Planungssignal erforderlich ist und die Erkennung für wenigstens ein Übertragungssignal oder wenigstens einen Übertragungskanal des ersten Signals der gegenwärtig durch das Endgerät ausgewählten Zelle nicht erforderlich ist; oder
wenn die empfangene Signalstärke des ausgewählten Übertragungssignals oder -kanals eine fünfte Schwelle und/oder die empfangene Signalqualität des ausgewählten Übertragungssignals oder -kanals eine sechsten Schwelle erreicht, ein Übertragungssignal oder -kanal des ersten Signals, das einem Übertragungssignal oder -kanal der inhärenten Messressource der gegenwärtig durch das Endgerät ausgewählten Zelle entspricht, erkannt wird, und auf Grundlage eines Erkennungsergebnisses bestimmt wird, ob die Erkennung oder Überwachung für Übertragungssignale oder -kanäle der inhärenten Übertragungsressource der gegenwärtig durch das Endgerät ausgewählten Zelle und/oder die Erkennung oder Überwachung für das Planungssignal erforderlich ist.

4. Verfahren nach Anspruch 3, wobei wenigstens eines der Folgenden zutrifft:
die dritte Schwelle ist gleich der fünften Schwelle ist oder unterscheidet sich von dieser; oder
die vierte Schwelle ist gleich der sechsten Schwelle oder unterscheidet sich von dieser.

5. Verfahren nach Anspruch 1, wobei das Referenzsignal und/oder der Referenzkanal für die Synchronisation und die Angabe der primären Systeminformationen in dem System einen Synchronisationssignalblock, SSB, umfasst.

6. Verfahren nach Anspruch 1, wobei ein Übertragungssignal oder -kanal des ersten Signals oder Kanals einem Übertragungssignal oder -kanal der inhärenten Messressource entspricht.

7. Verfahren nach Anspruch 1, wobei ein Übertragungssignal oder -kanal des ersten Signals oder Kanals mehreren Übertragungssignalen oder -kanälen der inhärenten Messressource entspricht.

8. Verfahren nach Anspruch 1, wobei sich die erste Schwelle auf eine Schwelle für die Erkennungsleistung bezieht, die von dem Kommunikationssystem angegeben wird und erreicht werden muss, wenn das Übertragungssignal oder der Übertragungskanal, das/der dem ersten Signal oder Kanal entspricht, als effektive Referenz verwendet werden kann.

9. Verfahren für die Erkennung, implementiert durch ein erstes Endgerät, **dadurch gekennzeichnet, dass** das Verfahren umfasst:
Abschließen (201) der Endgeräteauswahl und Auswählen für die Überwachung eines zweiten Endgerätes; Messen (202) der Signalqualitäten oder Signalstärken des zweiten Endgerätes bei dem Empfangen erster Informationen von dem zweiten Endgerät, wobei die ersten Informationen angeben, dass das zweite Endgerät ein zweites Signal oder einen zweiten Kanal übertragen wird, wobei die Messung eine Messung auf Grundlage des zweiten Signals oder Kanals und/oder eine Messung auf Grundlage einer inhärenten Messressource von dem zweiten Endgerät umfasst, wobei wenigstens ein Übertragungssignal oder -kanal des zweiten Signals oder -kanals eine Entsprechung mit wenigstens einem Übertragungssignal oder -kanal der inhärenten Messressource des zweiten Endgeräts aufweist;
wenn ein Erkennungsergebnis wenigstens eines Übertragungssignals oder -kanals in dem wenigstens einen Übertragungssignal oder -kanal des zweiten Signals oder Kanals eine zweite Bedingung erfüllt, Auswählen (203), aus dem wenigstens einen Übertragungssignal oder -kanal des zweiten Signals oder Kanals, eines Übertragungssignals oder -kanals mit der besten Signalqualität oder der besten Signalstärke als ein Erkennungsziel; und
wenn ein Erkennungsergebnis von keinem des wenigstens einen Übertragungssignals oder -kanals des ersten Signals oder Kanals die zweite Bedingung erfüllt, Aussieben (203) eines Zielübertragungssignals oder -kanals der inhärenten Messressource durch Messen des wenigstens einen Übertragungssignals oder -kanals der inhärenten Messressource des zweiten Endgeräts;
wobei die zweite Bedingung eines darstellt von:
ein Übertragungssignal oder -kanal des zweiten Signals oder Kanals wird erkannt;
eine erkannte Leistung des Übertragungssignals oder -kanals ist größer oder gleich einer siebten Schwelle;
eine erkannte Qualität des Übertragungssignals oder -kanals ist größer oder gleich einer achten Schwelle;
die erkannte Leistung des Übertragungssignals oder -kanals ist größer als die siebte Schwelle; oder
die erkannte Qualität des Übertragungssignals oder -kanals ist größer als die zweite Schwelle, wobei die inhärente Messressource eines umfasst von:
einem Referenzsignal für die Synchronisierung in einer Endgerät-Endgerät-Verbindung;
einem Referenzsignal und/oder einem Kanal für die Synchronisierung und die Angabe der primären Systeminformationen in der Endgerät-Endgerät-Verbindung; oder
einem Referenzsignal, das von dem System konfiguriert wird und für die Messung des Ruhezustands verwendet werden kann, wobei eines des wenigstens einen Übertragungssignals oder -kanals des zweiten Signals oder -kanals eine Quasi-Co-Location-Beziehung, QCL-Beziehung, zu wenigstens einem des Übertragungssignals oder -kanals der inhärenten Messressource aufweist,
wobei das zweite Signal oder der zweite Kanal für das erste Endgerät verwendet wird, um eine Erkennung nach dem Durchführen einer Endgeräteauswahl durchzuführen und auf Grundlage eines Erkennungsergebnisses zu bestimmen, ob eine nachfolgende Überwachung oder Erkennung für Übertragungssignale oder -kanäle einer inhärenten Messressource des zweiten Endgeräts und/oder eine nachfolgende Erkennung oder Überwachung für ein Planungssignal erforderlich ist.

10. Verfahren nach Anspruch 9, wobei
wenn wenigstens ein Übertragungssignal oder -kanal in dem wenigstens einen Übertragungssignal oder -kanal des zweiten Signals oder Kanals die zweite Bedingung erfüllt, die Erkennung für ein beliebiges Übertragungssignal oder einen beliebigen Kanal der inhärenten Messressource und/oder die Erkennung oder Überwachung für das Planungssignal nicht erforderlich ist; oder
wenn keines des wenigstens einen Übertragungssignals oder -kanals des zweiten Signals oder Kanals die zweite Bedingung erfüllt, die Erkennung für die Übertragungssignale oder -kanäle der inhärenten Übertragungsressource, das Sieben auf das wenigstens eine Übertragungssignal oder den wenigstens einen Übertragungskanal der inhärenten Messressource und/oder die Erkennung oder Überwachung für das Planungssignal erforderlich sind.

11. Verfahren nach einem der Ansprüche 9 bis 10, wobei
wenn eine Empfangssignalstärke des ausgewählten Übertragungssignals oder -kanals eine neunte Schwelle und/oder eine Empfangssignalqualität des ausgewählten Übertragungssignals oder -kanals eine zehnte Schwelle nicht erreicht, die Erkennung oder Überwachung für wenigstens ein Übertragungssignal oder wenigstens einen Übertragungskanal, das/der der inhärenten Messressource des zweiten Endgerätes entspricht, und/oder die Erkennung oder Überwachung für das Planungssignal erforderlich ist und die Erkennung für das wenigstens eine Übertragungssignal oder den wenigstens einen Übertragungskanal des zweiten Signals des zweiten Endgerätes nicht erforderlich ist; oder
wenn die empfangene Signalstärke des ausgewählten Übertragungssignals oder -kanals eine elfte Schwelle und/oder die empfangene Signalqualität des ausgewählten Übertragungssignals oder -kanals eine zwölfte Schwelle erreicht, ein Übertragungssignal oder -kanal des zweiten Signals, das einem Übertragungssignal oder -kanal der inhärenten Messressource des zweiten Endgerätes entspricht, erkannt wird, und auf Grundlage eines Erkennungsergebnisses bestimmt wird, ob die Erkennung oder Überwachung für Übertragungssignale oder -kanäle der inhärenten Übertragungsressource des zweiten Endgerätes und/oder die Erkennung oder Überwachung für das Planungssignal erforderlich ist.

12. Verfahren nach Anspruch 9, wobei das Referenzsignal und/oder der Referenzkanal für die Synchronisation und die Angabe der primären Systeminformationen in der Endgerät-Endgerät-Verbindung einen Sidelink-Synchronisationssignalblock, SL SSB, umfasst.

13. Verfahren nach Anspruch 9, wobei ein Übertragungssignal oder -kanal des zweiten Signals oder Kanals einem Übertragungssignal oder -kanal der inhärenten Messressource entspricht.

14. Verfahren nach Anspruch 9, wobei ein Übertragungssignal oder -kanal des zweiten Signals oder Kanals mehreren Übertragungssignalen oder -kanälen der inhärenten Messressource entspricht.

15. Endgerät (500), das einen Prozessor (502) und einen Speicher (503) zum Speichern eines durch den Prozessor ausführbaren Computerprogramms umfasst,
wobei der Prozessor dazu konfiguriert ist, das Computerprogramm auszuführen, um Vorgänge des Verfahrens nach einem der Ansprüche 1 bis 8 oder Vorgänge des Verfahrens nach einem der Ansprüche 9 bis 14 zu implementieren.

## Revendications

1. Procédé de détection, mis en œuvre par un terminal, **caractérisé en ce que** le procédé comprend :
la mesure (102), dans une cellule sélectionnée pour une mise en attente après la réalisation (101) d'une sélection ou resélection de cellules conçues avec un premier signal ou canal, des qualités de signal ou intensités de signal d'une cellule actuellement sélectionnée par le terminal, ladite mesure comprenant une mesure faite en fonction du premier signal ou canal et/ou une mesure faite en fonction d'une ressource de mesure inhérente de la cellule actuellement sélectionnée par le terminal, au moins un signal ou canal de transmission du premier signal ou canal ayant une correspondance avec au moins un signal ou canal de transmission de la ressource de mesure inhérente de la cellule actuellement sélectionnée par le terminal,
lorsqu'un résultat de détection d'au moins un signal ou canal de transmission parmi l'au moins un signal ou canal de transmission du premier signal ou canal satisfait une première condition, la sélection (103), parmi l'au moins un signal ou canal de transmission du premier signal ou canal, d'un signal ou canal de transmission présentant la meilleure qualité de signal ou la meilleure intensité de signal comme cible de détection, et
lorsqu'un résultat de détection d'aucun signal ou canal de transmission du premier signal ou canal ne satisfait la première condition, la réalisation (103) d'une mise en attente sur cellule et/ou d'une exclusion d'un signal ou canal de transmission cible de la ressource de mesure inhérente par mesure de l'au moins un signal ou canal de transmission de la ressource de mesure inhérente de la cellule actuellement sélectionnée par le terminal ;
ladite première condition représentant l'une des suivantes :
un signal ou canal de transmission du premier signal ou canal est détecté,
une puissance détectée du signal ou canal de transmission est supérieure ou égale à un premier seuil,
une qualité détectée du signal ou canal de transmission est supérieure ou égale à un deuxième seuil,
la puissance détectée du signal ou canal de transmission est supérieure au premier seuil, ou
la qualité détectée du signal ou canal de transmission est supérieure au deuxième seuil ;
ladite ressource de mesure inhérente comprenant des signaux et/ou des canaux qui sont utilisables pour la mesure du terminal et qui doivent être envoyés lorsqu'un côté réseau est capable de fournir un service pour le terminal,
ladite ressource de mesure inhérente comprenant l'un des éléments suivants :
un signal de référence pour la synchronisation dans un système,
un signal et/ou canal de référence pour la synchronisation et l'indication d'informations système primaires dans le système, ou
un signal de référence configuré par le système et utilisable pour une mesure en état de veille ;
un signal ou canal de l'au moins un signal ou canal de transmission du premier signal ou canal présentant une relation de quasi-colocalisation (QCL) avec au moins un signal ou canal de l'au moins un signal ou canal de transmission de la ressource de mesure inhérente,
ledit premier signal ou canal étant utilisé pour que le terminal réalise une détection après une mise en attente sur une cellule et détermine, en fonction d'un résultat de détection, si une recherche ou une détection ultérieure de signaux ou canaux de transmission d'une ressource de mesure inhérente de la cellule sur laquelle s'effectue l'attente et/ou si une détection ou une recherche ultérieure d'un signal de planification sont nécessaires.

2. Procédé selon la revendication 1, dans lequel
lorsqu'au moins un signal ou canal de transmission parmi l'au moins un signal ou canal de transmission du premier signal ou canal satisfait la première condition, la détection de tout signal ou canal de transmission de la ressource de mesure inhérente et/ou la détection ou la recherche du signal de planification ne sont pas nécessaires, ou
lorsqu'aucun signal ou canal de transmission du premier signal ou canal ne satisfait la première condition, la détection des signaux ou canaux de transmission de la ressource de transmission inhérente, le repérage de l'au moins un signal ou canal de transmission de la ressource de mesure inhérente et/ou la détection ou la recherche du signal de planification sont nécessaires.

3. Procédé selon l'une quelconque des revendications 1 et 2, dans lequel
lorsqu'une intensité de signal reçu du signal ou canal de transmission sélectionné ne satisfait pas un troisième seuil et/ou qu'une qualité de signal reçu du signal ou canal de transmission sélectionné ne satisfait pas un quatrième seuil, la détection ou la recherche d'au moins un signal ou canal de transmission correspondant à la ressource de mesure inhérente et/ou la détection ou la recherche du signal de planification sont nécessaires et la détection d'au moins un signal ou canal de transmission du premier signal de la cellule actuellement sélectionnée par le terminal n'est pas nécessaire, ou
lorsque l'intensité de signal reçu du signal ou canal de transmission sélectionné satisfait un cinquième seuil et/ou que la qualité de signal reçu du signal ou canal de transmission sélectionné satisfait un sixième seuil, un signal ou canal de transmission du premier signal correspondant à un signal ou canal de transmission de la ressource de mesure inhérente de la cellule actuellement sélectionnée par le terminal est détecté et il est déterminé, en fonction d'un résultat de détection, si la détection ou la recherche des signaux ou canaux de transmission de la ressource de transmission inhérente de la cellule actuellement sélectionnée par le terminal et/ou la détection ou la recherche du signal de planification sont nécessaires.

4. Procédé selon la revendication 3, dans lequel au moins l'un des cas suivants s'applique :
le troisième seuil est identique ou différent du cinquième seuil, ou
le quatrième seuil est identique ou différent du sixième seuil.

5. Procédé selon la revendication 1, dans lequel le signal et/ou canal de référence pour la synchronisation et l'indication d'informations système primaires dans le système comprend un bloc de signaux de synchronisation (SSB).

6. Procédé selon la revendication 1, dans lequel un signal ou canal de transmission du premier signal ou canal correspond à un signal ou canal de transmission de la ressource de mesure inhérente.

7. Procédé selon la revendication 1, dans lequel un signal ou canal de transmission du premier signal ou canal correspond à de multiples signaux ou canaux de transmission de la ressource de mesure inhérente.

8. Procédé selon la revendication 1, dans lequel le premier seuil se rapporte à un seuil de puissance de détection qui est indiqué par le système de communication et doit être atteint lorsque le signal ou canal de transmission correspondant au premier signal ou canal peut être utilisé comme référence effective.

9. Procédé de détection, mis en œuvre par un premier terminal, **caractérisé en ce que** le procédé comprend :
la réalisation (201) de la sélection du terminal et la sélection d'une recherche d'un deuxième terminal,
la mesure (202) des qualités de signal ou des intensités de signal du deuxième terminal lors de la réception de premières informations en provenance du deuxième terminal, lesdites premières informations indiquant que le deuxième terminal transmettra un deuxième signal ou canal, ladite mesure comprenant une mesure faite en fonction du deuxième signal ou canal et/ou une mesure faite en fonction d'une ressource de mesure inhérente appartenant au deuxième terminal, au moins un signal ou canal de transmission du deuxième signal ou canal ayant une correspondance avec au moins un signal ou canal de transmission de la ressource de mesure inhérente du deuxième terminal,
lorsqu'un résultat de détection d'au moins un signal ou canal de transmission parmi l'au moins un signal ou canal de transmission du deuxième signal ou canal satisfait une deuxième condition, la sélection (203), parmi l'au moins un signal ou canal de transmission du deuxième signal ou canal, d'un signal ou canal de transmission présentant la meilleure qualité de signal ou la meilleure intensité de signal comme cible de détection, et
lorsqu'un résultat de détection d'aucun signal ou canal de transmission du premier signal ou canal ne satisfait la deuxième condition, l'exclusion (203) d'un signal ou canal de transmission cible de la ressource de mesure inhérente par mesure de l'au moins un signal ou canal de transmission de la ressource de mesure inhérente du deuxième terminal ;
ladite deuxième condition représentant l'une des suivantes :
un signal ou canal de transmission du deuxième signal ou canal est détecté,
une puissance détectée du signal ou canal de transmission est supérieure ou égale à un septième seuil,
une qualité détectée du signal ou canal de transmission est supérieure ou égale à un huitième seuil,
la puissance détectée du signal ou canal de transmission est supérieure au septième seuil, ou
la qualité détectée du signal ou canal de transmission est supérieure au huitième seuil ;
la ressource de mesure inhérente comprenant l'un des éléments suivants :
un signal de référence pour la synchronisation dans une liaison de terminal à terminal,
un signal et/ou canal de référence pour la synchronisation et l'indication d'informations système primaires dans la liaison de terminal à terminal, ou
un signal de référence configuré par le système et utilisable pour une mesure en état de veille ;
un signal ou canal de l'au moins un signal ou canal de transmission du deuxième signal ou canal présentant une relation de quasi-colocalisation (QCL) avec au moins un signal ou canal de l'au moins un signal ou canal de transmission de la ressource de mesure inhérente,
ledit deuxième signal ou canal étant utilisé pour que le premier terminal réalise une détection la réalisation d'une sélection de terminal et détermine, en fonction d'un résultat de détection, si une recherche ou une détection ultérieure de signaux ou canaux de transmission d'une ressource de mesure inhérente du deuxième terminal et/ou une détection ou une recherche ultérieure d'un signal de planification sont nécessaires.

10. Procédé selon la revendication 9, dans lequel
lorsqu'au moins un signal ou canal de transmission parmi l'au moins un signal ou canal de transmission du deuxième signal ou canal satisfait la deuxième condition, la détection de tout signal ou canal de transmission de la ressource de mesure inhérente et/ou la détection ou la recherche du signal de planification ne sont pas nécessaires, ou
lorsqu'aucun signal ou canal de transmission du deuxième signal ou canal ne satisfait la deuxième condition, la détection des signaux ou canaux de transmission de la ressource de transmission inhérente, le repérage de l'au moins un signal ou canal de transmission de la ressource de mesure inhérente et/ou la détection ou la recherche du signal de planification sont nécessaires.

11. Procédé selon l'une quelconque des revendications 9 et 10, dans lequel
lorsqu'une intensité de signal reçu du signal ou canal de transmission sélectionné ne satisfait pas un neuvième seuil et/ou qu'une qualité de signal reçu du signal ou canal de transmission sélectionné ne satisfait pas un dixième seuil, la détection ou la recherche d'au moins un signal ou canal de transmission correspondant à la ressource de mesure inhérente du deuxième terminal et/ou la détection ou la recherche du signal de planification sont nécessaires et la détection d'au moins un signal ou canal de transmission du deuxième signal du deuxième terminal n'est pas nécessaire, ou
lorsque l'intensité de signal reçu du signal ou canal de transmission sélectionné satisfait un onzième seuil et/ou que la qualité de signal reçu du signal ou canal de transmission sélectionné satisfait un douzième seuil, un signal ou canal de transmission du deuxième signal correspondant à un signal ou canal de transmission de la ressource de mesure inhérente du deuxième terminal est détecté et il est déterminé, en fonction d'un résultat de détection, si la détection ou la recherche des signaux ou canaux de transmission de la ressource de transmission inhérente au deuxième terminal et/ou la détection ou la recherche du signal de planification sont nécessaires.

12. Procédé selon la revendication 9, dans lequel le signal et/ou canal de référence pour la synchronisation et l'indication d'informations système primaires dans la liaison de terminal à terminal comprend un bloc de signaux de synchronisation de liaison latérale (SL SSB, sidelink synchronization signal block).

13. Procédé selon la revendication 9, dans lequel un signal ou canal de transmission du deuxième signal ou canal correspond à un signal ou canal de transmission de la ressource de mesure inhérente.

14. Procédé selon la revendication 9, dans lequel un signal ou canal de transmission du deuxième signal ou canal correspond à de multiples signaux ou canaux de transmission de la ressource de mesure inhérente.

15. Terminal (500) comprenant un processeur (502) et une mémoire (503) destinée à contenir un programme informatique exécutable par le processeur,
le processeur étant conçu pour exécuter le programme informatique afin de mettre en œuvre les opérations du procédé selon l'une quelconque des revendications 1 à 8, ou pour mettre en œuvre les opérations du procédé selon l'une quelconque des revendications 9 à 14.
